(19) **Europäisches Patentamt**
**European Patent Office**
**Office européen des brevets**

(11) **EP 2 817 969 B1**

(12) **FASCICULE DE BREVET EUROPEEN**

(45) Date de publication et mention
de la délivrance du brevet:
**11.10.2017 Bulletin 2017/41**

(51) Int Cl.:
*H04N 21/24* (2011.01)    *H04N 21/439* (2011.01)
*H04N 21/442* (2011.01)

(21) Numéro de dépôt: **13704132.3**

(22) Date de dépôt: **15.02.2013**

(86) Numéro de dépôt international:
**PCT/EP2013/053076**

(87) Numéro de publication internationale:
**WO 2013/124223 (29.08.2013 Gazette 2013/35)**

(54) **PROCEDE DE GENERATION D'UN FLUX DE PAQUETS NUMERIQUES EN SORTIE D'UN ENCODEUR, DISPOSITIF APTE A GENERER UN TEL FLUX ENCODE ET, SYSTEME APTE A UTILISER UN TEL FLUX ENCODE**

VERFAHREN ZUR ERZEUGUNG EINES STROMS AUS DIGITALEN PAKETEN AM AUSGANG EINES CODIERERS, VORRICHTUNG ZUR ERZEUGUNG EINER SOLCHEN CODIERTEN STROMS UND SYSTEM ZUR VERWENDUNG EINES SOLCHEN CODIERTEN STROMS

METHOD FOR GENERATING A STREAM OF DIGITAL PACKETS AT THE OUTPUT OF AN ENCODER, DEVICE CAPABLE OF GENERATING SUCH AN ENCODED STREAM, AND SYSTEM CAPABLE OF USING SUCH AN ENCODED STREAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2012 FR 1251528**

(43) Date de publication de la demande:
**31.12.2014 Bulletin 2015/01**

(73) Titulaire: **TDF**
**92120 Montrouge Cedex (FR)**

(72) Inventeurs:
• **HAIDAR, Mouhtar**
**35136 Saint-Jacques de la Lande (FR)**
• **VINCENT, David**
**35150 Amanlis (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**US-A1- 2002 006 140      US-A1- 2004 190 463**
**US-A1- 2011 119 064      US-B1- 6 480 234**

• **MARTIN DIETZ ET AL: "MPEG-2 Audio NBC (13818-7) Transport over Application Level Protocols", 35. MPEG MEETING; 08-07-1996 - 12-07-1996; TAMPERE; (MOTION PICTUREEXPERT GROUP OR ISO/IEC JTC1/SC29/WG11),, no. M1137, 2 juillet 1996 (1996-07-02), XP030030531, ISSN: 0000-0331**
• **ISO/IEC: "ISO/IEC 13818-1. INFORMATION TECHNOLOGY - GENERIC CODING OF MOVING PICTURES AND ASSOCIATED AUDIO INFORMATION: SYSTEMS. // TECHNOLOGIES DE L'INFORMATION - CODAGE GÉNÉRIQUE DES IMAGES ANIMÉES ET DU SON ASSOCIÉ: SYSTÈMES - Recommendation ITU-T H.222.0 (2000E)", INTERNATIONAL STANDARD ISO/IEC,, vol. 13818-1, 1 décembre 2000 (2000-12-01) , pages I-XVII,1, XP002601409,**
• **"Mapping of AES3 Data into an MPEG-2 Transport Stream", , 5 août 2002 (2002-08-05), pages 1-6, XP055044093, Extrait de l'Internet: URL:N/A [extrait le 2012-11-13]**

## Description

### 1. Domaine de l'invention

L'invention concerne un procédé de génération d'une information temporelle associé à des paquets de données émis successivement dans un flux isochrone. La présente invention se rapporte au domaine de la diffusion de contenus numériques sur des réseaux de communication, et notamment des contenus audio.

La présente invention se rapporte plus particulièrement à l'amélioration de la précision apportée lorsqu'une première information temporelle est disponible au sein des paquets de données transmis.

### 2. Art antérieur

De nos jours, il existe de nombreux moyens de réaliser la transmission de contenus audio, parmi lesquels les techniques se basant sur les standards issus du consortium DVB (de l'Anglais « Digital Video Broadcast » pour « Diffusion Vidéo Numérique ») et MPEG. D'autres modes de transmissions de paquets de données sont possibles avec des réseaux fonctionnant à l'aide du protocole IP (de l'Anglais « Internet Protocol » pour « Protocole Internet »). Les paquets de contenus audio sont transmis vers un appareil destiné à les traiter en temps réel afin de les reproduire. Pour que la reproduction s'effectue à une vitesse constante et sans trou, il est important de cadencer précisément l'émission des paquets. Si les paquets sont émis trop vite alors l'appareil de traitement doit les enregistrer temporairement dans une mémoire d'une taille importante. Si les paquets sont émis trop lentement, l'appareil de traitement les traiterait à une vitesse plus lente ce qui risque de générer des trous à la reproduction.

L'interface définie par le standard AES (de l'Anglais «Audio Engineering Society ») permet la transmission de trames audio entre un émetteur et un récepteur. Les trames AES sont générées à la fréquence de 48 KHz, et envoyées à cette fréquence vers un encodeur. 192 trames AES forment un bloc AES. Chaque bloc contient une information temporelle pour situer dans le temps la création du premier échantillon du bloc. Les autres échantillons du bloc ne sont pas associés à une information temporelle.

Lors de la production simultanée de plusieurs flux d'échantillons sonores par des appareils différents, il est nécessaire de marquer chaque échantillon par une information temporelle individuelle et précise. De cette façon, les différents flux peuvent être synchronisés les uns avec les autres de façon à fournir un flux combinant des signaux sonores captés aux mêmes moments. Une solution permettant d'ajouter un marqueur temporel aux échantillons sonores consiste à utiliser un module GPS (« Global Positioning System » en Anglais) et à associer chaque échantillon sonore à une donnée temporelle fournie par les informations GPS.

Dans certaines circonstances, les flux d'échantillons sonores sont transmis à plusieurs codeurs afin de générer autant de flux codés qu'il y a de codeurs. Ce cas intervient par exemple quand un codeur est utilisé en équipement principal, et qu'un autre codeur est utilisé en cas de défaillance du premier. Ce second équipement dit « de secours » reçoit les mêmes signaux sonores et réalise le même codage. Les trames en sorties sont formatées pour contenir des paquets d'un nombre prédéterminé d'échantillons sonores. Lors de la commutation entre l'équipement principal et l'équipement de secours, il est nécessaire que les deux équipements produisent le même flux avec le même formatage. De cette façon, lors de la commutation d'un équipement à l'autre, qui intervient entre deux paquets, il n'y a pas de discontinuités sonores.

Pour produire les mêmes flux de sortie, une solution consiste à synchroniser le traitement de chaque équipement et notamment à transmettre aux différents codeurs l'identification des échantillons sonores qui sont les premiers d'un paquet. Cette solution implique une communication spécifique entre les codeurs.

Le document MPEG-2 Audio NBC - transport over Application level, publié le 08-07-1996, décrit les descripteurs des paquets de données transmettant des données audio encodées selon la norme MPEG-2. Ce document décrit le transport de signaux audio d'un seul flux et ne suggère aucune solution permettant d'encoder des flux pour que les flux de sortie soient les mêmes.

De ce fait, la présente invention permet de s'affranchir d'une telle communication entre les codeurs et propose un traitement spécifique dans chaque codeur qui évite de les synchroniser les uns avec les autres.

### 3. Objectifs de l'invention

La présente invention apporte une solution qui ne présente pas les inconvénients décrits plus haut, tout en proposant les avantages listés ci-dessus. La solution proposée consiste, au niveau de l'encodeur, à générer une information temporelle associée à chaque trame d'un bloc, et non pas uniquement la première trame du bloc. Cette information est utile pour synchroniser plusieurs encodeurs utilisant les mêmes trames AES et ainsi réduire tout risque de décalage dans le traitement d'un document audio. De ce fait, l'invention permet à deux appareils éloignés de pouvoir se synchroniser sans signaux extérieurs.

### 4. Exposé de l'invention

La présente invention propose un procédé de génération d'un flux de paquets de données numériques en sortie d'un encodeur. Cet encodeur encode en entrée un flux de paquets de données numériques contenant une succession d'échantillons de données. Cet encodeur produit en sortie un flux comportant des trames possédant un nombre déterminé d'échantillons de donnée reçus en entrée de l'encodeur, chaque trame encodant une succession d'échantillons commençant par un premier échantillon.

Selon l'invention, un tel procédé comporte une étape de détermination de la valeur d'un numéro identifiant chaque échantillon contenu dans le flux d'entrée à partir d'un paramètre contenu dans le flux de paquets de données numériques, la valeur du numéro dudit premier échantillon dans chaque trame étant un multiple éventuellement nul du nombre déterminé d'échantillons.

De cette manière, quel que soit l'encodeur qui les produit, le regroupement des échantillons pour former des trames de sorties s'effectue en fonction du numéro de l'échantillon et ne dépend pas de caractéristiques propres à l'encodeur. Si plusieurs encodeurs génèrent en parallèle des flux à partir des mêmes échantillons d'entrée, alors les flux de sorties sont strictement identiques. La commutation entre des flux de sorties émis par plusieurs encodeurs intervient alors lors de la transmission des mêmes échantillons et ne produit pas d'artefacts nuisibles.

L'invention propose, selon un mode particulier de réalisation, que ledit flux d'entrée est découpé en une succession de blocs contenant une succession d'échantillons de données. La valeur de numéro identifiant le premier échantillon de chaque bloc est incluse dans chaque bloc, et le numéro de chaque échantillon au sein d'un bloc est calculé en ajoutant au numéro du premier échantillon du bloc le rang de l'échantillon suivant au sein de ce bloc. De cette manière, le numéro de chaque échantillon reçu est facilement déterminé.

Selon un autre mode de réalisation, les blocs transmis par le flux d'entrée ont un nombre d'échantillons différent du nombre déterminé d'échantillons du flux de sortie. De cette manière, quel que soit la façon de regrouper les échantillons dans le flux d'entrée, le regroupement des échantillons dans le flux de sortie tient compte uniquement du numéro de l'échantillon et non d'information associé au bloc d'entrée qui le contient.

Selon un autre mode de réalisation, une première information temporelle est incluse dans chaque bloc du flux d'entrée. Chaque trame de sortie est associée à une seconde information temporelle. La seconde information temporelle est calculée en additionnant la première information temporelle associée au bloc contenant le premier échantillon de la succession d'échantillons encodés dans une trame avec l'écart temporel entre la réception par l'encodeur dudit bloc et dudit échantillon. De cette manière, il est possible de rajouter de la précision dans l'identification temporelle de chaque trame. Ainsi, un processus traitant des trames provenant de plusieurs sources sonores peut les synchroniser avec une grande précision.

Selon une variante de réalisation, les paquets de données d'entrée sont reçus espacés par des intervalles de temps régulier. Chaque trame de sortie est associée à une seconde information temporelle qui est calculée en additionnant la première information temporelle associée au bloc contenant le premier échantillon de la succession d'échantillons encodés dans une trame avec l'intervalle de temps multiplié par le rang de l'échantillon au sein du bloc d'entrée. Ainsi, le moment de réception de chaque échantillon de données présents dans le flux d'entrée est facilement déterminable.

Selon un autre mode de réalisation, la première information temporelle est remise à zéro au début d'une période de temps déterminée. Une information reçue dans le flux d'entrée identifie les blocs contenant une première information temporelle dont la valeur vient d'être remise à zéro. La valeur d'une horloge interne à l'encodeur étant remise à zéro lorsque l'échantillon d'entrée associé à cette remise à zéro est envoyé en sortie. De cette manière, l'appareil d'encodage peut déterminer que l'information temporelle reçue dans ce bloc est inférieure à la précédente et en tient compte pour la détermination des informations temporelles associées à chaque trame de ce bloc et du bloc précédent. Selon un mode de réalisation, les échantillons contiennent une donnée sonore.

Selon un autre mode de réalisation, un flux de paquets de données numériques est encodé au format AES et produit un flux de sortie selon un format déterminé, par exemple AAC. Le paramètre utilisé pour la détermination du numéro de chaque échantillon est contenu dans chaque paquet de données.

L'invention concerne également un dispositif comprenant :

- un moyen de réception d'un flux d'entrée comprenant des paquets de données numériques contenant une succession d'échantillons de données,
- un moyen d'encodage dudit flux d'entrée pour encoder un nombre déterminé d'échantillons de données dans des trames, et
- un moyen de génération d'un flux de sortie comportant lesdites trames.

Le dispositif comporte en outre un moyen de détermination de la valeur d'un numéro identifiant chaque échantillon contenu dans le flux d'entrée. Le moyen d'encodage encodant une succession d'échantillons commençant par un premier échantillon. La valeur du numéro dudit premier échantillon dans chaque trame est un multiple éventuellement nul du nombre déterminé d'échantillons.

L'invention concerne aussi un produit programme d'ordinateur comprenant des instructions de programme pour l'exécution du procédé de génération d'un flux de données encodées.

L'invention concerne aussi un système comprenant une pluralité d'encodeurs aptes à générer un flux de paquets selon l'un quelconque des modes de génération décrits précédemment. Chacun des encodeurs reçoit le même flux d'entrée et émet le même flux de sortie. Un appareil de commutation permet de commuter d'un flux de sortie émis par un premier encodeur vers un second flux de sortie émis par un second encodeur en cas de défaillance du premier. De cette façon, quel que soit l'encodeur qui les produit, les trames contiennent les mêmes échantillons sans décalage d'un encodeur à l'autre. La commutation entre des flux de sorties émis par plusieurs encodeurs intervient sans artefact car lors de la transmission des mêmes échantillons.

## 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 décrit le format général de trames AES pour la transmission d'échantillons sonores,
- la figure 2 décrit le format général d'un bloc de trames AES pour la transmission d'échantillons sonores,
- la figure 3 décrit un exemple d'encodeur recevant des trames AES et générant un flux audio,
- la figure 4 représente un exemple d'ordinogramme montrant des étapes du procédé de génération d'information temporelles associées à des trames.

## 6. Description d'un mode de réalisation de l'invention

### 6.1 Principe général

L'invention se situe dans le contexte de l'émission et la réception de trames de données transmises de façon isochrone. L'invention propose de générer un flux de données encodées à partir d'échantillons numérotés et de regrouper des blocs d'échantillons dans des trames en fonction uniquement du numéro d'échantillons. De cette façon, le regroupement des échantillons ne dépend pas de caractéristiques propres à l'encodeur et quel que soit l'encodeur, les flux de sorties produits à partir de flux d'entrée auront les mêmes contenus encodés.

### 6.2 Description des dispositifs

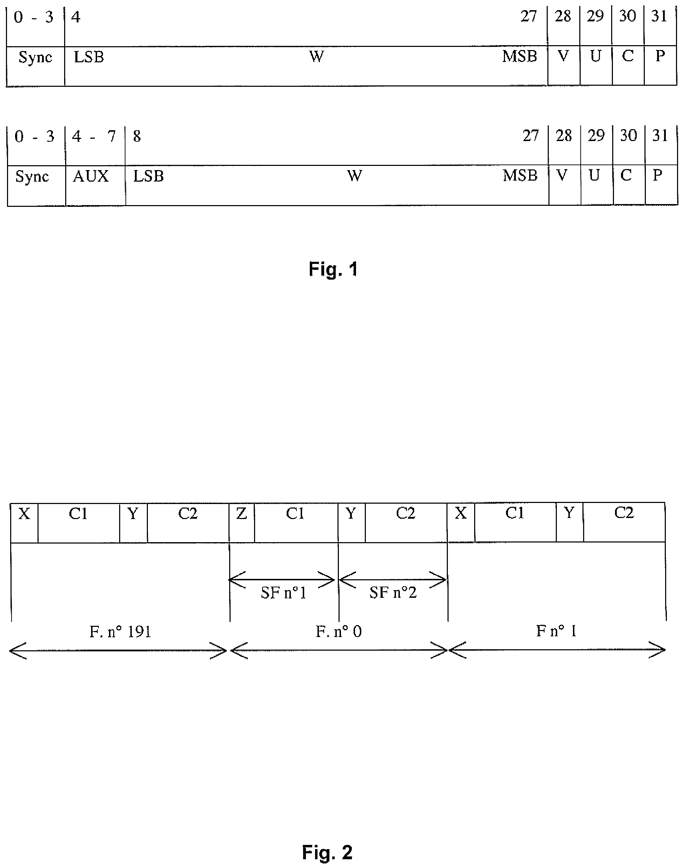

Dans un premier temps, des exemples de dispositifs vont être exposés, puis dans un second temps, les différentes étapes des procédés sont décrites en relation avec l'invention.
Cet encodeur peut faire partie d'une installation de prise de son permettant la saisie d'une ou plusieurs sources sonores. Chaque source fournit un flux de trames défini selon le standard AES. La figure 1 illustre le contenu des trames AES. Les trames AES forment un bloc de 64 bits divisé en deux sous-trames de 32 bits, la première sous-trame contient un échantillon sonore de la voie de gauche, et la seconde un échantillon sonore de la voie de droite. Si la source est monophonique, les données numériques des deux échantillons de la trame sont identiques. Il est possible de transmettre deux voies audio monophoniques indépendantes dans les deux sous-trames mais l'échantillonnage de ces deux sources audio doit être synchrone. Pour plus de facilités de compréhension, nous assimilerons dans la suite du document la réception d'une trame AES à la réception d'un échantillon.
La production des échantillons est isochrone, c'est-à-dire la durée de l'intervalle de temps séparant la réception de deux trames consécutives est fixe. La norme AES spécifie une émission selon un cadencement à 48 KHz. La source sonore peut être un microphone numérique ou tout autre moyen de génération de signaux numériques sonores transmis de façon isochrone.
Chaque sous-trame contient un préambule « Sync » de 4 bits pour la synchronisation, suivi d'un champ W de 20 bits pour transmettre l'échantillon audio. On peut utiliser 4 bits auxiliaires « AUX » pour apporter la résolution de l'audio à 24 bits, ou utiliser ces 4 bits pour coder des informations quelconques. La fin de chaque sous-trame contient 4 bits spécifiques :

  le bit « V » indique la validité du signal (audio ou non audio),
  le bit « U » permet de transporter des données propriétaires,
  le bit « C » indique le statut de voie, il sera détaillé par la suite,
  le bit « P » contient la valeur de parité de la sous-trame.

Une source numérique est un outil informatique qui doit communiquer avec d'autres appareils et de ce fait transmettre des informations de contrôle et d'état. Ces informations sont transmises à l'aide du bit C. Les trames AES sont regroupées en bloc et les valeurs de tous les bits C du bloc sont extraites et concaténées pour former le champ C. L'encodeur génère en sortie un flux de paquets contenant une information codant un nombre déterminé d'échantillons. Le nombre d'échantillons codés dans un paquet du flux de sortie d'un encodeur est le même pour chaque paquet, mais le nombre d'échantillons dans un bloc du flux d'entrée de l'encodeur n'est généralement pas le même que le nombre d'échantillons codés dans les paquets du flux de sortie.
La figure 2 montre l'organisation de format de trames AES, formées de deux sous-trames SF n°1 et SF n°2. Un bloc est formé par 192 trames AES numérotées F.n°0, F.n°1, ... F.n° 191. Chaque trame AES contient un bit d'information C dont la valeur est concaténée avec les valeurs de ce bit contenues dans les autres trames du bloc pour former un champ C de 24 octets d'information. La norme TECH 3250 spécifie une partie des bits et des octets du champ C. Ces 24 octets d'information contiennent une information temporelle sur 32 bits associée au bloc, cette valeur est la date de création du premier échantillon sonore du bloc. Le champ C contient également une information spatiale appelée en Anglais : « Sample Address code » sur 32 bits qui spécifie le numéro du premier échantillon sonore du bloc. L'information spatiale permet de retrouver l'ordonnancement des blocs à la réception.

L'information temporelle notée Tc est codée en binaire, elle contient quatre champs définissant respectivement l'heure, la minute, la seconde, et le centième de seconde du moment de création du premier échantillon du bloc. Tous les jours à minuit, les 32 bits de cette donnée sont mis à « 00 : 00 : 00 : 00 » au niveau des sources sonores. Cette information temporelle est applicable pour tous les 192 échantillons sonores du bloc. Cette information est donc exacte pour le premier échantillon mais pas pour les 191 autres échantillons constituant le bloc. Selon le standard AES, les émissions de trames sont cadencées à 48 KHz, un bloc est donc émis toutes les 4 millisecondes. L'encodeur utilise l'information temporelle du champ C pour le marquage temporel des données du flux audio codé.

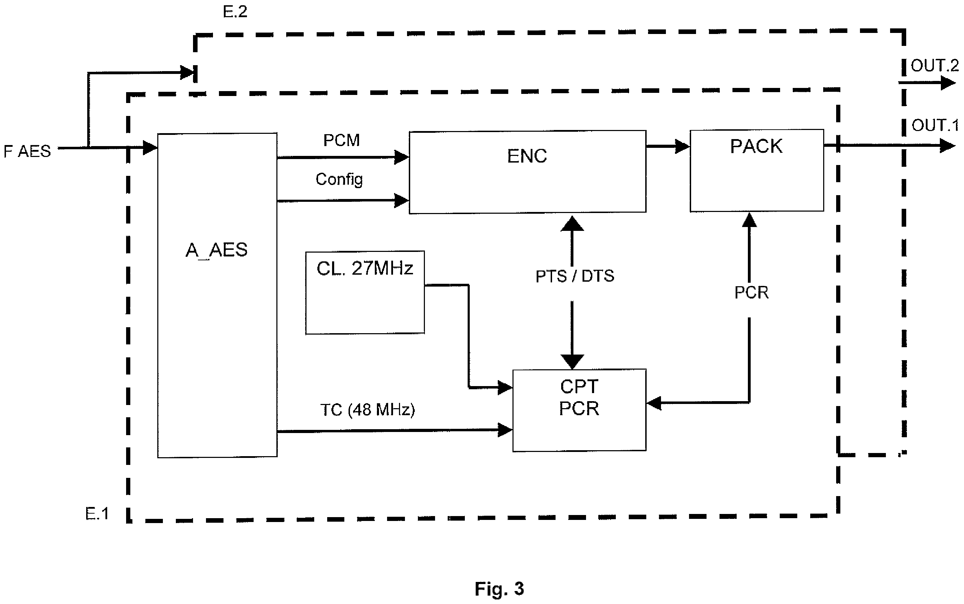

La figure 3 décrit un schéma de principe d'un encodeur audio E.1 recevant des trames F AES. L'encodeur audio réalise le codage et la compression d'échantillons sonore afin de les transmettre dans des flux, éventuellement combinés avec des flux vidéo. Les trames F AES sont reçues par un analyseur A_AES qui extrait les données sonores, les valeurs PCM (de l'Anglais « Pulse Code Modulation ») et un signal d'horloge à 48 KHz généré par la réception des trames AES. Les données sonores sont transmises à un circuit d'encodage ENC qui effectue aussi la compression des données audio. L'encodeur E.1 utilise les signaux d'une horloge interne CL cadencée typiquement à 27 MHz. Les signaux de synchronisation à 48 KHz ainsi que ceux fournis par l'horloge interne CL, sont transmis à un circuit de génération CPT-PCR d'informations temporelles appelés PCR (signifiant « Program Clock Reference » en Anglais) pour générer des signaux d'horloge secondaire. Les signaux PCR sont transmis à un circuit de mise en paquet PACK qui délivre en sortie un flux audio codé. Il est évident que les éléments présentés par la figure 3 sous la forme de circuits électroniques distincts peuvent aussi être réalisés sous forme de modules de programme exécutables au sein d'un appareil électronique doté d'une unité centrale et d'une mémoire de programme.

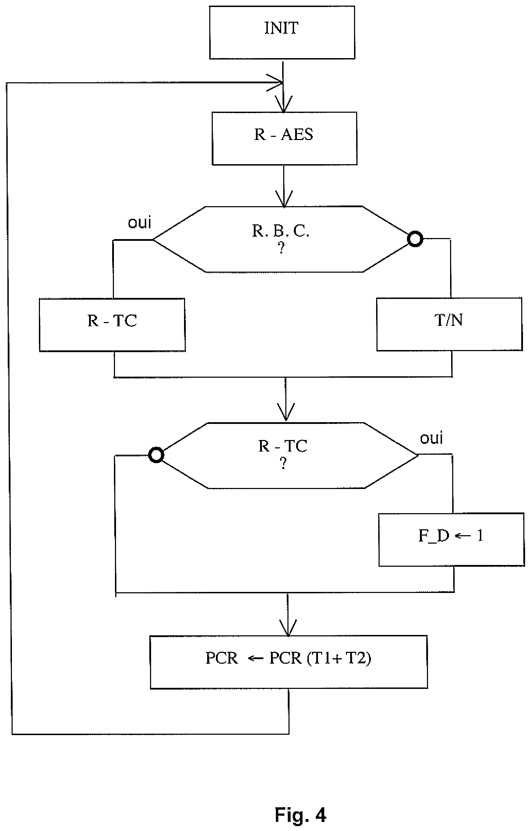

Après avoir détaillé les différents éléments de l'invention, nous allons maintenant expliquer comment ceux-ci coopèrent. La figure 4 montre un ordinogramme présentant les principales étapes d'un procédé de génération d'un flux de trames audio selon un mode particulier de réalisation.

6.3 Description des étapes du procédé

L'encodeur E.1 reçoit les trames AES dans un analyseur de trames A_AES au rythme de 48000 trames par seconde. L'analyseur A_AES extrait les blocs de 192 trames constituant une succession d'échantillons et reconstitue la valeur du champ C.

La première étape de l'organigramme permet d'initialiser le temps à 0 des signaux d'horloge secondaire PCR générés par le circuit CPT-PCR. Ensuite, lors de la réception de chaque information temporelle extraite du champ C d'un nouveau bloc, le circuit CPT-PCR corrige sa valeur courante en utilisant la valeur contenue dans le bloc.

A l'étape R-AES, une trame AES est reçue. A l'étape R.B.C., pour chaque réception de trame, l'analyseur de trames A_AES détermine si un bloc complet vient d'être reçu, c'est-à-dire si la trame qui vient d'être reçue est la 192$^{\text{ième}}$ d'un bloc. Dans l'affirmative, à l'étape R - TC, l'analyseur A_AES extrait dans les 24 octets d'informations du champ C, l'information temporelle Tc du moment de création du premier échantillon du bloc, ainsi que le numéro de ce premier échantillon. La valeur Tc et le numéro du premier échantillon sont transmis au circuit CPT-PCR, et associés à la première trame du dernier bloc AES reçu et mémorisée pour être ultérieurement encodée. Dans la négative, la trame reçue n'est pas la dernière d'un bloc. L'information temporelle de l'échantillon reçu et son numéro n'étant pas transmis pour chaque échantillon, le procédé objet de l'invention permet à l'étape notée T/N de déterminer le numéro de l'échantillon et de calculer l'information Tn pour chaque trame de données encodées en utilisant l'équation suivante :

$$Tn = Tc + n \text{ x } dt,$$

où dt = 1/48 000 seconde = 20,83 μs, et n le numéro de la trame au sein du bloc courant.

Il a été dit qu'un numéro de compteur est affecté à chaque échantillon reçu. Si cet échantillon est le premier d'un bloc AES, alors le numéro de cet échantillon est donné par les 32 bits du champ « Sample Address code » extrait du champ C. Les numéros de chaque échantillon suivant sont déterminés en fonction du rang de chaque échantillon reçu depuis la réception du premier échantillon. Le moment associé à chaque échantillon est calculé en additionnant l'information temporelle associée au bloc contenant le premier échantillon de la succession d'échantillons encodés dans une trame avec l'écart temporel entre la réception par l'encodeur dudit bloc et dudit échantillon. Soit « i » le numéro du premier échantillon du bloc AES reçu par l'encodeur à l'instant Ti, le second échantillon de numéro « i + 1 » est reçu à l'instant Ti+1 = Ti + 20,83 μs, et sa date de création est Tc + 20,83μs, le troisième échantillon « i + 2 » est reçu à l'instant Ti+2 = Ti + 41,66 μs, et sa date de création est Tc + 41,66μs, et ainsi de suite. Le circuit CPT-PCR utilise la valeur de l'information temporelle du champ C du bloc et rajoute un décalage proportionnel au numéro d'ordre de la trame AES au sein du bloc.

Chaque trame du flux de sortie d'un codeur contient une information codant un nombre déterminé d'échantillons sonores, par exemple 1024 échantillons sont codés dans des trames AAC. Supposons que le compteur fournissant les numéros d'échantillons vienne de passer à 0, le premier échantillon du premier bloc possède la valeur 0, le numéro du premier échantillon du second bloc est 192, le numéro du premier échantillon du troisième bloc est 384, et ainsi de suite. Supposons que les trames de sortie contiennent 1024 échantillons encodés et que l'encodage commence exactement au moment où le premier bloc AES est reçu. Dans ce cas, la première trame de sortie encode les échantillons des 6 premiers bloc AES, c'est-à-dire les échantillons portant les numéros 0 à 959, et les 64 premiers échantillons du 7$^{ième}$ bloc AES, c'est-à-dire les échantillons portant les numéros 960 à 1023. Puis, la seconde trame de sortie encode les 128 autres échantillons du 7$^{ième}$ bloc, tous les échantillons des blocs 8 à 11, et les 124 premiers échantillons du 12$^{ième}$ bloc.

On constate aisément que le choix des échantillons formant des trames de sortie dépend principalement du moment où le regroupement des échantillons pour l'encodage a commencé. De ce fait, comme le montre la figure 3, si deux appareils E.1 et E.2 encodent de la même façon le même flux d'entrée de blocs AES et si le lancement de ces deux appareils n'est pas synchronisés, il y a toutes les chances (en fait 1023 sur 1024) que les trames de sortie qui contiennent l'information codée de 1024 échantillons consécutifs, ne soient pas les mêmes. La différence provient du décalage entre les premiers échantillons encodés dans chaque trame. De cette façon, si des commutations s'effectuent d'un appareil E.1 à un autre appareil E.2, une discontinuité sonore risque de se produire lors de la reproduction des signaux sonores issus du décodage de la première trame produite par le second encodeur.

La présente invention permet de résoudre ce problème puisqu'elle prévoit que les trames produites par n'importe quel encodeur E.1 ou E.2 à partir du même flux de paquets de données d'entrée contiennent l'information codée des mêmes échantillons sonores. Pour cela, chaque appareil réalise le regroupement des trames à coder en fonction du numéro de chaque échantillon et non en fonction du moment où le processus d'encodage sur l'appareil a commencé. De cette façon, et même si les deux encodeurs ne sont pas mis en marche au même moment, ils produisent le même flux de sortie c'est à dire : le même contenu audio, le même découpage et le même formatage des paquets de données.

Selon un mode préféré de réalisation, la valeur du numéro du premier échantillon de la succession est un multiple éventuellement nul du nombre d'échantillons dans une trame du flux de sortie. On rappelle que dans le cadre de la présente invention, le nombre d'échantillons codés dans un paquet du flux de sortie d'un encodeur est le même pour chaque paquet, mais le nombre d'échantillons dans un bloc du flux d'entrée de l'encodeur n'est généralement pas le même que le nombre d'échantillons codés dans les paquets du flux de sortie.

Il est écrit précédemment que l'information temporelle Tc transmise dans le champ C est codée sur 4 octets. La valeur reboucle à la valeur « 0 » toutes les 24 heures. Pour détecter le passage de la trame dont le numéro est une suite de « 1 » à une trame dont le numéro est une suite de «0», un bit D (pour « Discontinuité ») est implémenté dans le bloc C. Le drapeau de discontinuité D est mis à la valeur 1 lorsque la valeur Tc extraite du champ C passe à 0. De ce fait, l'état du bit D informe que le compteur PCR a rebouclé. La valeur PCR de l'horloge secondaire est remise à zéro lorsque l'échantillon d'entrée associé à cette remise à zéro est envoyé en sortie. Comme la valeur Tc est codée sur 32bits et que la valeur courante du PCR est codée sur 33bits + 9bits d'extension, Tc reboucle donc plus vite c'est à dire que Tc atteint son maximum avant que tous les bits du champ PCR soient à 1. L'information déduite du bit D est utile aux récepteurs afin qu'ils ne lèvent pas d'alarme de discontinuité du compteur PCR. Pour détecter un re-bouclage, le bit D du premier bloc dont l'information temporelle revient à la valeur « 00 : 00 : 00 : 00 », est mis à 1. A l'étape R-TC, l'analyseur de trames A-AES compare Tc à sa valeur précédente et positionne le bit D si Tc a rebouclé. La signalisation du rebouclage d'un compteur PCR est déjà décrite dans la norme ISO 13818-1 et DVB.

Lors de l'encodage et de la mise en paquet du flux audio codé et sur requête, le circuit CPT_PCR fournit une information temporelle PCR qui est incorporée dans le flux audio codé. Cette information temporelle est utilisée lorsque les trames sont décodées et reproduite, éventuellement en les synchronisant avec un contenu vidéo. Le temps associé à chaque échantillon lors de sa réception au niveau de l'encodeur est récupéré pour marquer les trames de sortie. La présente invention permet d'améliorer la précision des informations temporelles.

Selon un mode particulier de réalisation, l'encodeur E.1 dispose d'une horloge de 27 Mhz qui permet de calculer les PCR. Cette horloge peut être créée par le signal audio pour générer une horloge à 27 MHz (valeur contenue dans les PCR) identique pour chaque circuit d'encodage ENC. Les signaux de 27 Mhz génèrent une période de 37 ns qui peut être utilisée pour générer une information temporelle plus fine. Lors de l'arrivée de la première trame d'un bloc, une valeur d'horloge T_clk_0 est notée et associée à la valeur de l'information temporelle Tc transmise dans le champ C du bloc. Puis, lors de chaque réception ultérieure de trames de ce bloc, une valeur d'horloge T_clk_i est notée et associée à une trame « i ». L'information temporelle associée à une trame « i » est alors la somme de Tc et de l'écart entre T_clk_0 et T_clk_i. De cette manière, il est possible d'augmenter la précision de la valeur de temps à 37 ns près.

Il est possible que le nombre d'échantillons dans un bloc reçu par l'encodeur E.1 ne soit pas toujours le même. Pour déterminer le nombre de trames d'un bloc, il suffit de repérer le préambule d'un bloc et de comptabiliser les marques de synchronisation Sync dans le préambule de chaque trame. L'écart temporel entre la réception par l'encodeur du bloc et de la trame à marquer temporellement est calculé en multipliant le numéro d'ordre de cette trame au sein du bloc par l'intervalle de temps entre chaque trame.

L'invention n'est pas limitée aux modes de réalisation qui viennent d'être décrits. En particulier, l'invention peut être mise en oeuvre par tout appareil réalisant les fonctions d'encodage ou de décodage d'un flux contenant une composante audio et/ou visuelle.

**Revendications**

1. Procédé de génération d'un flux de paquets de données numériques en sortie d'un encodeur (E1), ledit encodeur recevant en entrée un flux découpé en blocs de trames contenant une succession d'échantillons de données audio selon le format AES, la valeur de numéro identifiant le premier échantillon de chaque bloc étant répartie dans chaque bloc, ledit encodeur produisant un flux de sortie comportant des paquets de données possédant un nombre déterminé d'échantillons successifs de données reçus en entrée de l'encodeur, chaque paquet de données encodant une succession de trames dont la première contient un premier échantillon,

   - une étape d'extraction au sein des données d'un bloc de trames reçues en entrée de l'encodeur du numéro identifiant le premier échantillon du bloc,
   - une étape de calcul du numéro de chaque échantillon du bloc en ajoutant au numéro du premier échantillon du bloc le rang de l'échantillon suivant au sein de ce bloc,
   - regroupement dans des paquets de données des trames à coder,
   la valeur du numéro du premier échantillon d'un paquet de données étant un multiple éventuellement nul du nombre déterminé d'échantillons dans les paquets de données produits par l'encodeur,
   - génération, en sortie de l'encodeur, des paquets de données numériques codés comportant les trames ainsi regroupées.

2. Procédé de génération d'un flux selon la revendication 1 où les blocs transmis par ledit flux d'entrée ont un nombre d'échantillons différent du nombre déterminé d'échantillons du flux de sortie.

3. Procédé de génération d'un flux selon l'une quelconque des revendications 1 et 2, où une première information temporelle est incluse dans chaque bloc du flux d'entrée, et en ce qu'il comporte une étape d'association de chaque trame de sortie à une seconde information temporelle, la seconde information temporelle étant calculée en additionnant la première information temporelle associée au bloc contenant le premier échantillon de la succession d'échantillons encodés dans une trame avec l'écart temporel entre la réception par l'encodeur dudit bloc et dudit échantillon.

4. Procédé de génération d'un flux selon l'une quelconque des revendications 1 et 2, où les trames d'entrée sont reçus espacés par des intervalles de temps régulier et en ce qu'une première information temporelle est incluse dans chaque bloc du flux d'entrée, le procédé comportant une étape d'association de chaque trame de sortie à une seconde information temporelle, la seconde information temporelle étant calculée en additionnant la première information temporelle associée au bloc contenant le premier échantillon de la succession d'échantillons encodés dans une trame avec l'intervalle de temps multiplié par le rang de l'échantillon au sein du bloc d'entrée.

5. Procédé de génération d'un flux selon l'une quelconque des revendications 3 et 4 où ladite première information temporelle est remise à zéro au début d'une période de temps déterminée, le procédé comportant une étape de réception d'une donnée identifiant les blocs contenant une première information temporelle dont la valeur vient d'être remis à zéro, la valeur d'une horloge interne à l'encodeur étant remise à zéro lorsque l'échantillon d'entrée associé à cette remise à zéro est envoyé en sortie.

6. Procédé de génération d'un flux selon l'une quelconque des revendications précédentes où les échantillons contiennent une donnée sonore.

7. Procédé de génération d'un flux selon la revendication 1 où ledit encodeur (E1) encode un flux de paquets de données numériques au format AES et produit un flux de sortie selon un format déterminé tel que le format AAC, ledit paramètre utilisé pour la détermination du numéro de chaque échantillon étant contenu dans chaque paquet de données.

8. Procédé de génération d'un flux selon la revendication 7 comportant une étape de génération de signaux d'horloge, PCR, à partir de l'information temporelle extraite du flux AES.

9. Dispositif (E) d'encodage comprenant un moyen de réception d'un flux d'entrée découpé en blocs comprenant des trames contenant une succession d'échantillons de données audio selon le format AES, la valeur de numéro identifiant le premier échantillon de chaque bloc étant répartie dans chaque bloc, un moyen d'encodage dudit flux d'entrée pour encoder un nombre déterminé d'échantillons successifs de données reçus en entrée dans des trames, et un moyen de génération d'un flux de sortie comportant lesdits paquets de données possédant une succession de trames reçues en entrée dont la première contient un premier échantillon, un moyen d'extraction au sein des données d'un bloc de trames reçues en entrée de l'encodeur du numéro identifiant le premier échantillon du bloc, un moyen de calcul du numéro de chaque échantillon du bloc en ajoutant au numéro du premier échantillon du bloc le rang de l'échantillon suivant au sein de ce bloc, ledit moyen d'encodage regroupant dans des paquets de données des trames à coder, la valeur du numéro du premier échantillon d'un paquet de données étant un multiple éventuellement nul du nombre déterminé d'échantillons dans les paquets de données produits par le dispositif d'encodage, ledit dispositif possédant également un moyen de génération en sortie des paquets de données numériques ainsi encodés comportant les trames ainsi regroupées.

10. Produit programme d'ordinateur téléchargeable depuis un réseau de communications et/ou stocké sur un support lisible par ordinateur et exécutable par une unité centrale, comprenant des instructions de programme pour la mise en oeuvre du procédé de génération d'un flux de données selon l'une quelconque des revendications 1 à 8.

11. Système d'encodage comprenant une pluralité d'encodeurs aptes à générer un flux de paquets selon le dispositif de la revendication 9, chaque encodeur recevant le même flux d'entrée et émettant le même flux de sortie, ledit système comportant un moyen de commutation permettant de commuter d'un flux de sortie émis par un premier encodeur vers un second flux de sortie émis par un second encodeur en cas de défaillance du premier encodeur.

**Patentansprüche**

1. Verfahren zur Erzeugung eines Stroms aus digitalen Datenpaketen am Ausgang eines Codierers (E1), wobei der Codierer am Eingang einen Strom empfängt, der in Rahmenblöcke unterteilt wird, die eine Folge von Audiodatenabtastungen nach dem AES-Format enthalten, wobei der Wert der Nummer, die die erste Abtastung von jedem Block identifiziert, in jedem Block verteilt wird, wobei der Codierer einen Ausgangsstrom erzeugt, der Datenpakete aufweist, die eine vorbestimmte Anzahl von aufeinanderfolgenden Abtastungen von Daten, die am Eingang des Codierers empfangen werden, besitzen, wobei jedes Datenpaket eine Folge von Rahmen codiert, wovon der erste eine erste Abtastung enthält,

- einen Schritt des Extrahierens aus den Daten eines Rahmenblocks, die am Eingang des Codierers empfangen werden, der Nummer, die die erste Abtastung des Blocks identifiziert,
- einen Schritt des Berechnens der Nummer von jeder Abtastung des Blocks, indem zu der Nummer der ersten Abtastung des Blocks der Rang der nächsten Abtastung in diesem Block hinzugefügt wird,
- Zusammenfassen in Datenpaketen der zu codierenden Rahmen,
wobei der Wert der Nummer der ersten Abtastung eines Datenpaketes ein Vielfaches, das eventuell Null beträgt, der bestimmten Anzahl von Abtastungen in den Datenpaketen, die von dem Codierer erzeugt werden, ist,
- Erzeugen der codierten digitalen Datenpakete am Ausgang des Codierers, die die auf diese Weise zusammengefassten Rahmen aufweisen.

2. Verfahren zur Erzeugung eines Stroms nach Anspruch 1, wobei die Blöcke, die von dem Eingangsstrom übertragen werden, eine Anzahl von Abtastungen aufweisen, die von der bestimmten Anzahl von Abtastungen des Ausgangsstroms verschieden ist.

3. Verfahren zur Erzeugung eines Stroms nach einem der Ansprüche 1 und 2, wobei eine erste Zeitinformation in jedem Block des Eingangsstroms enthalten ist, und dass es einen Schritt des Zuordnens von jedem Ausgangsrahmen zu einer zweiten Zeitinformation aufweist, wobei die zweite Zeitinformation berechnet wird, indem die erste Zeitinformation, die einem Block zugeordnet wird, der die erste Abtastung der Folge von codierten Abtastungen in einem Rahmen enthält, mit dem zeitlichen Abstand zwischen dem Empfangen des Blocks und der Abtastung durch den Codierer addiert wird.

4. Verfahren zur Erzeugung eines Stroms nach einem der Ansprüche 1 und 2, wobei die Eingangsrahmen durch regelmäßige Zeitintervalle beabstandet empfangen werden und dass eine erste Zeitinformation in jedem Block des Eingangsstroms enthalten ist, wobei das Verfahren einen Schritt des Zuordnens von jedem Ausgangsrahmen zu einer zweiten Zeitinformation aufweist, wobei die zweite Zeitinformation berechnet wird, indem die erste Zeitinformation, die einem Block zugeordnet wird, der die erste Abtastung der Folge von codierten Abtastungen in einem Rahmen enthält, mit dem zeitlichen Abstand, der mit dem Rang der Abtastung in dem Eingangsblock multipliziert wird, addiert wird.

5. Verfahren zur Erzeugung eines Stroms nach einem der Ansprüche 3 und 4, wobei die erste Zeitinformation zu Beginn von einer bestimmten Zeitdauer auf Null gesetzt wird, wobei das Verfahren einen Schritt des Empfangens von einem Datum aufweist, das die Blöcke identifiziert, die eine erste Zeitinformation enthalten, deren Wert soeben auf Null gesetzt worden ist, wobei der Wert einer Uhr im Inneren des Codierers auf Null gesetzt wird, wenn die Eingangsabtastung, die dieser Nullsetzung zugeordnet wird, am Ausgang gesendet wird.

6. Verfahren zur Erzeugung eines Stroms nach einem der vorhergehenden Ansprüche, wobei die Abtastungen ein akustisches Datum enthalten.

7. Verfahren zur Erzeugung eines Stroms nach Anspruch 1, wobei der Codierer (E1) einen Strom aus digitalen Datenpaketen im AES-Format codiert und einen Ausgangsstrom nach einem vorbestimmten Format wie das AAC-Format erzeugt, wobei der Parameter, der für das Bestimmen der Nummer von jeder Abtastung verwendet wird, in jedem Datenpaket enthalten ist.

8. Verfahren zur Erzeugung eines Stroms nach Anspruch 7, umfassend einen Schritt des Erzeugens von Uhrsignalen ausgehend von der Zeitinformation, die aus dem AES-Strom extrahiert wird.

9. Vorrichtung (E) zum Codieren, umfassend eine Vorrichtung zum Empfangen eines Eingangsstroms, der in Blöcke unterteilt ist, die Rahmen aufweisen, die eine Folge von Audiodatenabtastungen nach dem AES-Format enthalten, wobei der Wert der Nummer, die die erste Abtastung von jedem Block identifiziert, in jedem Block verteilt ist, ein Codiermittel des Ausgangsstroms, um eine vorbestimmte Anzahl von aufeinanderfolgenden Abtastungen von Daten zu codieren, die am Eingang in die Rahmen empfangen werden, und ein Mittel zum Erzeugen eines Ausgangsstroms, der die Datenpakete aufweist, die eine Folge von Rahmen, die am Eingang empfangen werden, aufweisen, wovon der erste eine erste Abtastung enthält,
ein Mittel zum Extrahierens aus den Daten eines Rahmenblocks, die am Eingang des Codierers empfangen werden, der Nummer, die die erste Abtastung des Blocks identifiziert, ein Mittel zum Berechnen der Nummer von jeder Abtastung des Blocks, indem zu der Nummer der ersten Abtastung des Blocks der Rang der nächsten Abtastung in diesem Block hinzugefügt wird, wobei das Mittel zum Codieren zu codierende Rahmen in Datenpakete zusammenfasst, wobei der Wert der Nummer der ersten Abtastung eines Datenpaketes ein Vielfaches, das eventuell Null beträgt, der bestimmten Anzahl von Abtastungen in den Datenpaketen, die von der Vorrichtung zum Codieren erzeugt werden, ist, wobei die Vorrichtung ebenfalls ein Mittel zum Erzeugen am Ausgang der auf diese Weise codierten digitalen Datenpakete besitzt, die die auf diese Weise zusammengefassten Rahmen aufweisen.

10. Computerprogrammprodukt, das von einem Kommunikationsnetz herunterladbar ist und/oder auf einem computerlesbaren Medium gespeichert ist und von einer Zentraleinheit ausführbar ist, umfassend Programmanweisungen zum Umsetzen des Verfahrens zur Erzeugung eines Datenstroms nach einem der Ansprüche 1 bis 8.

11. Codierungssystem, umfassend mehrere Codierer, die geeignet sind, einen Strom von Paketen gemäß der Vorrichtung von Anspruch 9 zu erzeugen, wobei jeder Codierer den gleichen Eingangsstrom empfängt und den gleichen Ausgangsstrom sendet, wobei das System ein Mittel zum Umschalten aufweist, das ermöglicht, von einem Ausgangsstrom, der von einem ersten Codierer gesendet wird, zu einem Ausgangsstrom umzuschalten, der von einem zweiten Codierer gesendet wird, wenn der erste Codierer ausfällt.

## Claims

1. Method for generating a stream of digital data packets at the output of an encoder (E1), the said encoder receiving at the input a stream divided into blocks of frames containing a succession of audio data samples according to the AES format, the numerical value identifying the first sample of each block being distributed in each block, the said encoder producing an output stream comprising data packets having a predetermined number of successive data samples received at the input of the encoder, each data packet encoding a succession of frames, the first of which contains a first sample,

   - a stage of extracting from within the data of a block of frames received at the input of the encoder the number identifying the first sample of the block,
   - a stage of calculating the number of each sample of the block by adding to the number of the first sample of the block the ranking of the following sample within this block,
   - grouping in data packets of the frames to be encoded the value of the number of the first sample of a data packet being a multiple, possibly zero, of the predetermined number of samples in the data packets produced by the encoder,
   - generating, at the output of the encoder, encoded digital data packets comprising the thereby grouped frames.

2. Method for generating a stream according to Claim 1, wherein the blocks transmitted by the said input stream have a number of sample different from the predetermined number of samples of the output stream.

3. Method for generating a stream according to either one of Claims 1 and 2, wherein a first time information is included in each block of the input stream, and in that it comprises a stage of associating each output frame with a second time information, the second time information being calculated by adding the first time information associated with the block containing the first sample of the succession of encoded samples in a frame, to the time difference between the reception by the encoder of the said block and of the said sample.

4. Method for generating a stream according to either one of Claims 1 and 2, wherein the input frames are received spaced apart at regular time intervals and in that a first time information is included in each block of the input stream, the method comprising a stage of associating each output frame with a second time information, the second time information being calculated by adding the first timed information associated with the block containing the first sample of the succession of encoded sample in a frame, to the time interval multiplied by the ranking of the sample within the input block.

5. Method for generating a stream according to either one of Claims 3 and 4, wherein the said first time information is reset to zero at the start of a predetermined time period, the method comprising a stage of receiving a datum identifying the blocks containing a first time information whose value has just been reset to zero, the value of an internal clock in the encoder being reset to zero when the input sample associated with this resetting to zero is output.

6. Method for generating a stream according to any one of the preceding claims, wherein the samples contain a sound datum.

7. Method for generating a stream according to Claim 1, wherein the said encoder (E1) encodes a stream of digital data packets in the AES format and produces an output stream according to a predetermined format such as the AAC format, the said parameter used to determine the number of each sample being contained in each data packet.

8. Method for generating a stream according to Claim 7, comprising a stage of generating PCR clock signals from the time information extracted from the AES stream.

9. Encoding device (E) comprising a means for receiving an input stream divided into blocks comprising frames containing a succession of audio data samples according to the AES format, the numerical value identifying the first sample of each block being distributed in each block, a means for encoding the said input stream in order to encode a predetermined number of successive data samples received at the input in the frames, and a means for generating an output stream comprising the said data packets having a succession of frames received at the input, the first of which contains a first sample, a means for extracting from within the data of a block of frames received at the input of the encoder the number identifying the first sample of the block, a means for calculating the number of each sample of the block by adding to the number of the first sample of the block the ranking of the following sample within this block, the said encoding means grouping in data packets of the frames to be encoded, the value of the number of the first sample of a data packet being a multiple, possibly zero, of the predetermined number of samples in the data packets produced by the encoding device, the said device also having a means for generating at the output thereby encoded digital data packets comprising the thereby grouped frames.

10. Computer program product downloadable from a communications network and/or stored on a computer-readable medium and executable by a central unit, comprising program instructions for the implementation of the process for generating a stream of data according to any one of Claims 1 to 8.

11. Encoding system comprising a plurality of encoders capable of generating a stream of packets according to the device of Claim 9, each encoder receiving the same input stream and outputting the same output stream, the said system comprising a switching means enabling an output stream output by a first encoder to be switched to a second output stream output by a second encoder in the case of failure of the first encoder.

| 0 - 3 | 4 | | 27 | 28 | 29 | 30 | 31 |
|-------|-----|-------|------|-----|-----|-----|-----|
| Sync | LSB | W | MSB | V | U | C | P |

| 0 - 3 | 4 - 7 | 8 | | 27 | 28 | 29 | 30 | 31 |
|-------|-------|-----|-----|------|-----|-----|-----|-----|
| Sync | AUX | LSB | W | MSB | V | U | C | P |

**Fig. 1**

| X | C1 | Y | C2 | Z | C1 | Y | C2 | X | C1 | Y | C2 |
|---|----|---|----|---|----|---|----|---|----|---|----|
| | | | | | | | | | | | |

SF n°1  SF n°2

F. n° 191  F. n° 0  F n° 1

**Fig. 2**

**Fig. 3**

**Fig. 4**